# EUROPEAN PATENT SPECIFICATION

(11) **EP 3 920 620 B1**
(45) Date of publication and mention of the grant of the patent: **12.11.2025**
(21) Application number: 20749696.9
(22) Date of filing: 21.01.2020
(51) Int. Cl.: H04W 72/04, H04L 1/00, H04J 3/16

(54) **METHOD, DEVICE AND SYSTEM FOR TRANSMITTING CLIENT SERVICES, AND COMPUTER-READABLE STORAGE MEDIUM**
CLIENT-DIENSTÜBERTRAGUNGSVERFAHREN, VORRICHTUNG UND -SYSTEM SOWIE COMPUTERLESBARES SPEICHERMEDIUM
PROCÉDÉ, APPAREIL ET SYSTÈME DE TRANSMISSION DE SERVICE CLIENT, ET SUPPORT D'INFORMATIONS LISIBLE PAR ORDINATEUR

(30) Priority: 31.01.2019 CN 201910100797
(43) Date of publication of application: 08.12.2021
(73) Proprietor: ZTE Corporation, Shenzhen Guangdong 518057 (CN)
(72) Inventor: LIU, Feng, Shenzhen, Guangdong 518057 (CN)
(74) Representative: Canzler & Bergmeier Patentanwälte Partnerschaft mbB
(86) International application number: PCT/CN2020/073370
(87) International publication number: WO 2020/156352

(56) References cited:
- EP-A1- 1 306 985
- EP-A1- 3 522 465
- WO-A1-2018/059446
- CN-A- 108 632 886
- CN-A- 108 809 901
- CN-A- 109 257 139
- IA # OIF: "Flex Ethernet 2.0 Implementation Agreement", FLEX ETHERNET 2.0 IMPLEMENTATION AGREEMENT, 22 June 2018 (2018-06-22), US, pages 1 - 51, XP055726361, Retrieved from the Internet <URL:https://www.oiforum.com/wp-content/uploads/2019/01/OIF-FLEXE-02.0-1.pdf>

## Description

### TECHNICAL FIELD

The present disclosure relates to, but is not limited to, the communication technology, and particularly relates to a method, device and system for transmitting client services, and a computer-readable storage medium.

### BACKGROUND

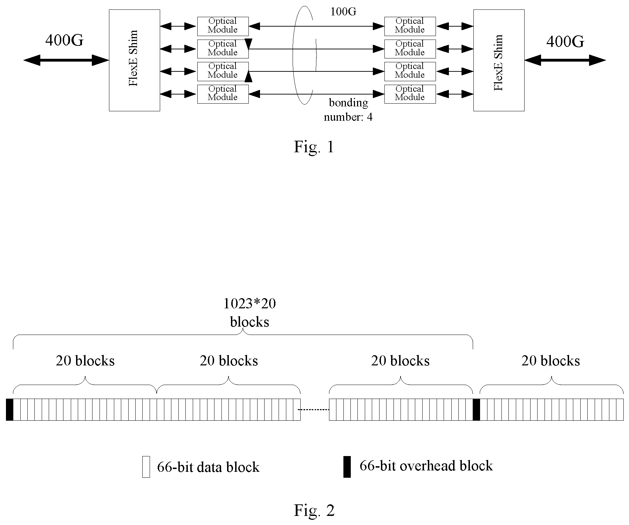

A sharp increase in user network information flow promotes a rapid increase in transmission bandwidth of a communication network, an interface bandwidth/speed of communication equipment has increased from 10M (unit: bit/second (bit/s)) to 100M, and then to 1G (unit: bit/s), 10G and 100G. 400G optical modules have been already developed, but the 400G optical modules are expensive and a price of one 400G optical module exceeds a prices of four 100G optical modules, which affects the commercial economic value of the 400G optical modules. In order to transmit 400G services through 100G optical modules, an international standards organization defines a Flexible Ethernet (FlexE) protocol, which bonds a plurality of 100G optical modules together to form a high-speed transmission channel. Fig. 1 is a schematic diagram illustrating an example of bonding four 100G optical modules together to form a 400G transmission channel. As shown in Fig. 1, four 100G optical modules are bonded together by using the FlexE protocol to form a 400G transmission channel, which is equivalent to one 400G optical module in the transmission speed, so that the transmission requirement of 400G services is met without increasing cost.

At present, the FlexE protocol defines 20 slots on a single 100G physical line, each slot having a bandwidth of 5G. A bonded 4*100G physical line can provide 4*20 slots, each of which is also defined to have a bandwidth of 5G. The number of the slots and the bandwidths of the slots defined by the FlexE protocol can meet the client service transmission requirements of Optical Transport Network (OTN), but the FlexE protocol encounters the following difficulties when applied to Packet Transport Network (PTN).
1. Since a 100G physical channel has only 20 slots in total, the total number of the slots is too small.
2. Since the bandwidth of each slot is 5G, a bandwidth (or granularity, the same hereinafter) of a single slot is too large.

The FlexE protocol defines a relatively small number of slots and a relatively large bandwidth for each slot, that is, few slots and large bandwidths. In the field of PTN services, the number of client services is large but each client service needs a relatively small bandwidth, that is, a large number of slots each having small granularity are required. Therefore, the FlexE protocol encounters difficulties in application scenarios of the PTN services.

A method for realizing small-granularity slots is provided in some documents, and the method is to divide one slot in a FlexE frame (each slot block represents a bandwidth of 5G bit/s, and a total of 1023 data blocks exist between FlexE overhead blocks in one slot) to obtain a smaller bandwidth. Since the number "1023" is not a multiple of 2 and 5, the method may result in unequal division in many scenarios. For example, when a sub-slot bandwidth of 2.5G bit/s is required, a 5G slot is divided into two sub-slots, with one sub-slot occupying 512 slot blocks (slightly less than the bandwidth of 2.5G bit/s) among the 1023 slot blocks and the other sub-slot occupying 513 slot blocks (slightly greater than the bandwidth of 2.5G bit/s) among the 1023 slot blocks, such that the sub-slot bandwidths are unequal. If each of the two sub-slots only occupies 512 slot blocks among the 1023 slot blocks, the two sub-slots have equal rates but the bandwidths of both of the slots are less than the desired standard speed, which fails to realize full-flow transmission of client service rate.

A PCT patent application, whose publication number is WO2018/059446A1, provides a method and device for transmitting traffic data, and a system. The method includes determining, by a transmitting end, a position of a bearing slot for bearing traffic data to be transmitted; determining, by the transmitting end, a position of a bearing data block group for bearing the traffic data to be transmitted; and transmitting, by the transmitting end, according to the position of the bearing slot and the position of the bearing data block group, the traffic data to be transmitted. Further provided is a computer storage medium.

A document, whose name is "Flex Ethernet 2.0 Implementation Agreement", discloses the Flex Ethernet (FlexE) Implementation Agreement provides a generic mechanism for supporting a variety of Ethernet MAC rates that may or may not correspond to any existing Ethernet PHY rate. This includes MAC rates that are both greater than (through bonding) and less than (through sub-rate and channelization) the Ethernet PHY rates used to carry FlexE. This can be viewed as a generalization of the Multi-Link Gearbox implementation agreements, removing the restriction on the number of bonded PHYs (MLG2.0, for example, supports one or two 100GBASE-R PHYs) and the constraint that the FlexE Clients correspond to Ethernet rates (MLG2.0 supports only 10G and 40G clients). FlexE 2.0 augments FlexE 1.0 by providing support for FlexE Groups composed of n × 200 Gb/s Ethernet PHYs and n × 400 Gb/s Ethernet PHYs, and several other features.

### SUMMARY

The invention is set out in the appended set of claims.

### BRIEF DESCRIPTION OF THE DRAWINGS

Fig. 1 is a schematic diagram illustrating application of the FlexE protocol in related art;
Fig. 2 is a schematic diagram of a slot division structure in the FlexE protocol according to the present disclosure;
Fig. 3 is a schematic diagram illustrating transmission of a service in slots in a 4* 100G mode in the FlexE protocol according to the present disclosure;
Fig. 4 is a schematic diagram illustrating reception of a service in slots in a 4*100G mode in the FlexE protocol according to the present disclosure;
Fig. 5 is a schematic diagram of a frame structure in the FlexE protocol according to the present disclosure;
Fig. 6 is a schematic diagram of a multi-frame structure in the FlexE protocol according to the present disclosure;
Fig. 7 is a schematic diagram illustrating transmission of a low-rate client service by using the FlexE protocol according to the present disclosure;
Fig. 8 is a flowchart illustrating a method for transmitting client services according to the present disclosure;
Fig. 9 is a schematic diagram illustrating a slot division method covering eight overhead blocks according to the present disclosure;
Fig. 10 is a schematic diagram illustrating a slot division method covering x FlexE frames according to the present disclosure;
Fig. 11 is a schematic diagram illustrating transmission of sequence numbers of FlexE frames according to the present disclosure;
Fig. 12 is a schematic diagram illustrating transmission of a first FlexE frame of sub-slots according to the present disclosure;
Fig. 13 is a schematic diagram illustrating a first transmission way of sub-slot configuration according to the present disclosure;
Fig. 14 is a schematic diagram illustrating a second transmission way of sub-slot configuration according to the present disclosure;
Fig. 15 is a schematic diagram of simplified sub-slot flag and a first FlexE frame according to the present disclosure;
Fig. 16 is a schematic structural diagram of a device for transmitting client services according to the present disclosure; and
Fig. 17 is a schematic structural diagram of a system for transmitting client services according to the present disclosure.

### DETAILED DESCRIPTION

The embodiments of the present disclosure will be described in detail below with reference to the accompanying drawings. It should be noted that the embodiments of the present disclosure and the features therein may be randomly combined with each other if no conflict is incurred.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

A sharp increase in user network information flow promotes a rapid increase in transmission bandwidth of a communication network, an interface bandwidth/speed of communication equipment has increased from 10M to 100M, and then to 1G, 10G and 100G. 400G optical modules have been already developed, but the 400G optical modules are expensive and a price of one 400G optical module exceeds a prices of four 100G optical modules, which affects the commercial economic value of the 400G optical modules. In order to meet a transmission requirement of 400G services without increasing cost, an international standards organization defines a FlexE protocol to transmit the 400G services through the 100G optical modules. The FlexE protocol bonds a plurality of 100G optical modules together to form a high-speed transmission channel. Fig. 1 is a schematic diagram illustrating an example of bonding four 100G optical modules together to form a 400G transmission channel. As shown in Fig. 1, four 100G optical modules are bonded together by using the FlexE protocol to form a 400G transmission channel, which is equivalent to one 400G optical module in the transmission speed, so that the transmission requirement of 400G services is met in an economical way.

During the transmission of client services, a 100G client packet is required to be subjected to 64b/66b encoding before being transmitted, a 64-bit data block is expanded into a 66-bit information block, and the added 2 bits are located in the front of the 66-bit block and serve as a start flag of the 66-bit block to indicate an information block type (a data block or a control block, for example, a start flag of "10" indicates a control block, and a start flag of "01"indicates a data block), and then the client packet is transmitted from an optical interface in the form of the 66-bit blocks. During the reception, an optical interface identifies the 66-bit blocks from the received data stream, and then recovers the original 64-bit data from the 66-bit blocks to reassemble the data packet. The FlexE protocol corresponds to a transformation layer of 64-bit block to 66-bit block, and the 66-bit blocks are ordered and planned before being transmitted. As shown in Fig. 2, for a 100G service, every 20 66-bit data blocks are set as a data block group, each group includes 20 data blocks which represent 20 slots, and each slot represents a service rate of 5G bit/s. When the 66-bit blocks are transmitted, one FlexE overhead block as shown by a black block in Fig. 2 is inserted after every 1023 data block groups (1023*20 data blocks) are transmitted; after one overhead block is inserted, the transmission of the data blocks is continued until 1023*20 data blocks are transmitted, then another overhead block is inserted, and so on. **In** this way, the overhead blocks are periodically inserted during the transmission of the data blocks, with 1023*20 data blocks located between every two adjacent overhead blocks.

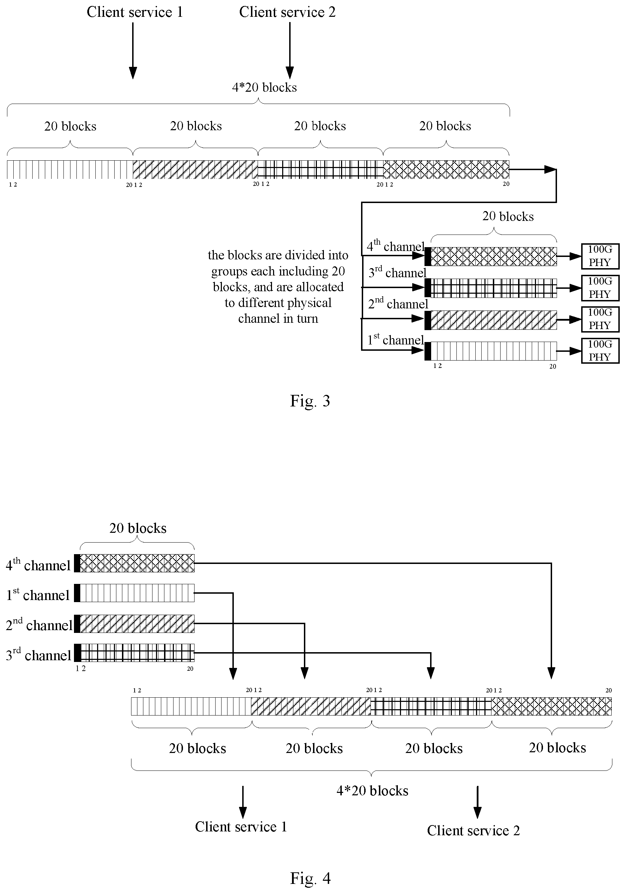

When the FlexE protocol is used to bond n physical channels together to form a large logical channel, the 66-bit data blocks are ordered and planned by using the FlexE protocol, every 20*n 66-bit data blocks are set as a data block group, and each group includes 20 data blocks which represent 20 slots. As shown in Fig. 3, in the case where four physical channels are bonded to form one logical channel, in a transmission process, the first 20 data blocks in a first data block group are transmitted to the first physical channel, the second 20 data blocks in the first data block group are transmitted to the second physical channel, the third 20 data blocks in the first data block group are transmitted to the third physical channel, the last 20 data blocks in the first data block group are transmitted to the fourth physical channel, then the first 20 data blocks in a second data block group are transmitted to the first physical channel, and so on, so as to transmit all of the 20*n data blocks equally to the four physical channels in a polling way. The data blocks on the four physical channels are completely aligned in the transmission process, and the overhead blocks are simultaneously inserted into the four physical channels every 1023 data block groups, so that the data blocks and the overhead blocks on the four physical channels are completely aligned. At a receiving end, as shown in Fig. 4, each physical channel receives the data blocks independently and then determines the locations of the overhead blocks. The data block groups on the four physical channels are realigned based on the locations of the overhead blocks on each physical channel. After the data block groups on the four physical channels are realigned based on the locations of the overhead blocks, the data blocks are reordered by an inverse process of the polling allocation carried out during the transmission: the 20 data blocks just after an overhead block on the first physical channel are acquired and ordered as the first 20 data blocks, the 20 data blocks just after an overhead block on the second physical channel are acquired, ordered as the second 20 data blocks and located after the first 20 data blocks, the 20 data blocks just after an overhead block on the third physical channel are acquired, ordered as the third 20 data blocks and located after the second 20 data blocks, the 20 data blocks just after an overhead block on the fourth physical channel are acquired, ordered as the fourth 20 data blocks and located after the third 20 data blocks, then the above procedures are repeated, the next 20 data blocks after the overhead block on the first physical channel are acquired, ordered as the fifth 20 data blocks and located after the fourth 20 data blocks, the next 20 data blocks after the overhead block on the second physical channel are acquired, ordered as the sixth 20 data blocks and located after the fifth 20 data blocks, and so on, so as to reorder the data block groups on the four physical channels to form one data block group on the large logical channel. In this way, the four physical channels can be bonded together to form one large logical channel. For a client service, only the one large logical channel is perceived and the service is transmitted through the large logical channel, with no need to perceive the four underlying physical channels.

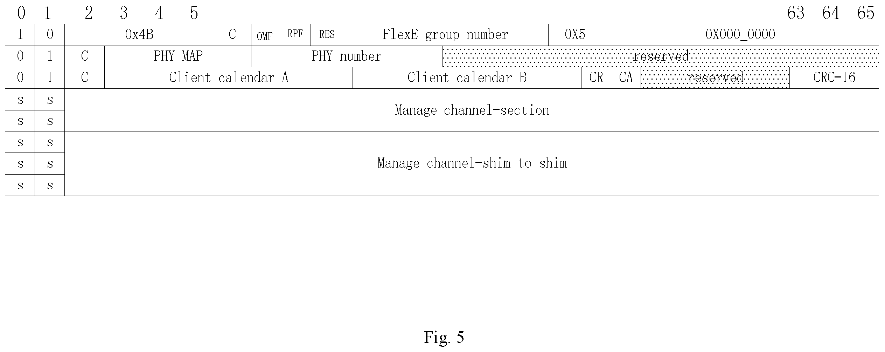

A FlexE overhead block is a 66-bit overhead block, and one overhead block is inserted every 1023*20 data blocks in the transmission of service data stream. The overhead block performs a positioning and aligning function in the whole service stream, and the location of first 20 66-bit data blocks and the location of following 20 66-bit data blocks in a client service can be determined after the overhead blocks are found. Fig. 5 shows the content of an overhead block, and eight consecutive overhead blocks form one FlexE overhead frame. One overhead block consists of a 2-bit block flag and 64-bit block contents. The block flag is located in the first two columns, and the block contents are located in the following 64 columns, a block flag in the first overhead block is "10", and block flags in the following seven overhead blocks are "01" or SS (SS means that the contents are uncertain). The contents of the first overhead block are: 0x4B (8 bits, 4B in hexadecimal), C bit (1 bit, an adjustment control indication), OMF bit (1 bit, an overhead frame multi-frame indication), RPF bit (1 bit, a remote defect indication), RES bit (1 bit, a reserved bit), FlexE group number (20 bits, indicating numbers of bonded groups), 0x5 (4 bits, 5 in hexadecimal), and 0x0000000 (28 bits, all are 0). 0x4B and 0x5 are flag indications of the first overhead block; in a receiving process, when 0x4B and 0x5 are found in the corresponding positions of an overhead block, it is indicated that such overhead block is a first overhead block of an overhead frame and forms an overhead frame together with the following consecutive seven overhead blocks.

In the structure of a FlexE overhead frame, the FlexE group number indicates a group identifier, and all members with the same group number belong to one group. Physical layer (PHY) number indicates a member number, and each of the members with the same group number has a unique PHY number, and all the members are arranged in ascending order of the PHY numbers. The PHY number is 8-bit data and can be represented by all the numbers between 0 and 255, so that one group can include 256 members at the most. According to a current standard, 0 and 255 are defined as reserved numbers for special applications, and the numbers from 1 to 254 are used by normal members.

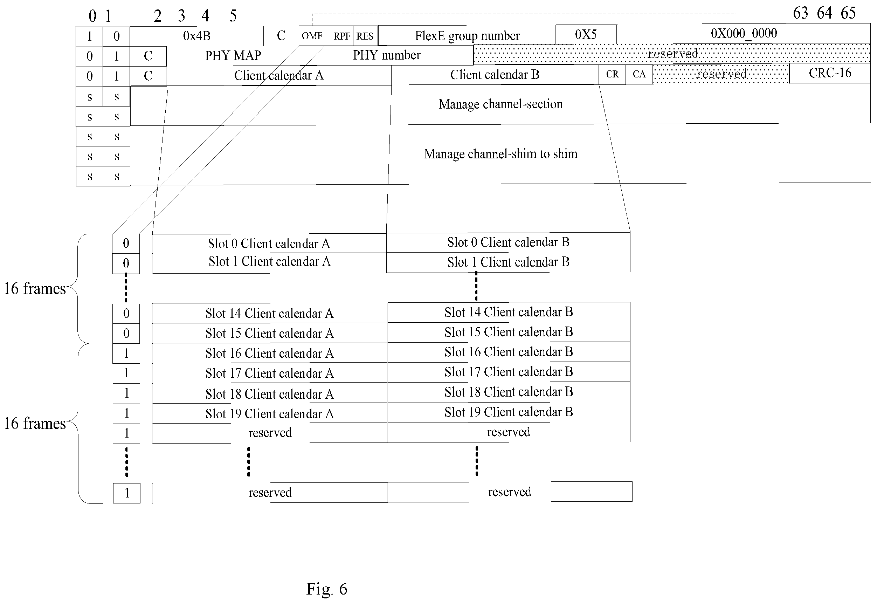

In the first overhead block, the OMF field is a multi-frame indication signal, as shown in Fig. 6. The OMF is a single bit value, the OMFs are 0 in sixteen consecutive frames, are 1 in the next sixteen consecutive frames, are 0 in the next sixteen consecutive frames, and are 1 in the next sixteen consecutive frames, that is, the values of the OMFs are repeated once every 32 frames, and a multi-frame consists of 32 frames. In a frame, a Client calendar field represents a client name carried in each slot and indicates to which client the slot belongs. Since the number of slots needed for carrying a client service is uncertain and is required to be flexibly modified, the Client calendar has two sets of configuration information, namely Client calendar A and Client calendar B, and two sets of configuration values are set in an operating mode and a standby mode respectively for dynamically and smoothly switching the configuration information. Three C bits exist in the FlexE frame structure. When all the C bits are "0", the Client calendar A is in the operating mode, and the Client calendar B is in the standby mode; when all the C bits are "1", the Client calendar A is in the standby mode, and the Client calendar B is in the operating mode. At one time point, only one set of Client calendar configuration value is in the operating mode, and the other set of configuration value is in the standby mode. A calendar switch request (CR) bit and a calendar switch acknowledge (CA) bit are negotiation signals for switching Client calendar states. The CR initiates a request and the CA responds to the request. When a slot configuration value needs to be modified, the configuration content of the standby mode is modified, the CR bit is inverted and a peer end is simultaneously informed of a need to switch the Client calendar states. The peer ends prepares according a standby Client calendar configuration value, and returns a CA response signal to the initiating end after the peer end is prepared. A configuration table switching process is started after the two ends agree with each other, the transmitting end inverts all the C bit values to switch the Client calendar which is originally in the operating mode to the standby mode and switch the Client calendar which is originally in the standby mode to the operating mode, thereby realizing the dynamic modification of the content of the Client calendar.

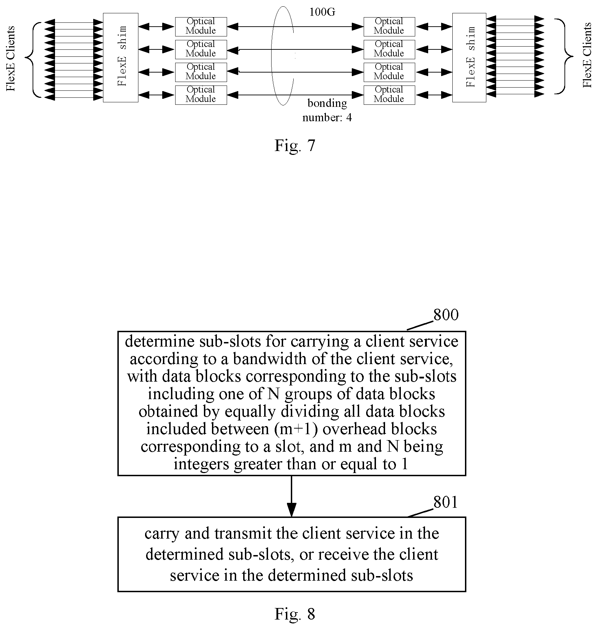

When a client service is carried by using the FlexE protocol, as shown in Fig. 7, the client service is only related to n*20 slots defined by the FlexE protocol (n is the number of physical lines), and each slot has a bandwidth of 5G. In the case where only one 100G member is available, a FlexE slot layer has only 20 slots and thus can carry 20 client services at the most, and the maximum bandwidth for each client service is 5G. In a 4*100G mode, the slot layer has merely 4*20 slots at the most and each slot has a bandwidth of 5G. The number and granularity of the slots defined by the FlexE protocol can meet the requirements in the scenarios of the OTN services, but the FlexE protocol encounters application difficulties in the scenarios of the PTN services. In the PTN scenarios, the number of client services is large; even through a total bandwidth of the client services does not exceed 100G, a total number of the client services may reach 1K or even dozens of K, which is much greater than the number of the slots (20 slots for a single 100G physical bandwidth) defined by the FlexE protocol. In the scenarios of the PTN services, a bandwidth of each service may be relatively small and may be 10M at a minimum; if a service with a bandwidth of 10M is transmitted in a 5G slot defined by the FlexE protocol, the bandwidth is wasted seriously.

With reference to Fig. 8, the present disclosure provides a method for transmitting a client service, including the following steps 800 to 801.

At step 800, determining sub-slots for carrying a client service according to a bandwidth of the client service, with data blocks corresponding to the sub-slots including one of N groups of data blocks obtained by equally dividing all data blocks included between (m+1) overhead blocks corresponding to a slot, and m and N being integers greater than or equal to 1.

In the present disclosure, the number of the sub-slots for carrying the client service can be determined according to the bandwidth of the client service and bandwidths of the sub-slots, that is, the number of the sub-slots for carrying the client service can be determined according to a formula, with G being the number of the sub-slots for carrying the client service, K being the bandwidth of the client service, and B being the bandwidths of the sub-slots.

After the number of the sub-slots for carrying the client service is determined, specific sub-slots used to carry the client service may be determined in any manner. For example, G sub-slots in an idle state are used to carry the client service.

In the present disclosure, a total bandwidth of the determined G sub-slots is greater than or equal to the bandwidth of the client service.

Step 801, carrying and transmitting the client service in the determined sub-slots, or receiving the client service in the determined sub-slots.

According to the present disclosure, the sub-slots which have completely equal rates and can reach a desired nominal rate of the client service are adopted to realize the transmission of the client service, which reduces the bandwidth waste.

In the present disclosure, before the step of determining the sub-slots according to the bandwidth of the client service, the method further includes determining a slot which needs to be divided into sub-slots; and equally dividing all the data blocks included between the (m+1) overhead blocks corresponding to the slot which needs to be divided into the sub-slots to obtain the N groups of data blocks.

In the present disclosure, all the data blocks included between the (m+1) overhead blocks corresponding to the slot which needs to be divided into the sub-slots may be equally divided in any way for obtaining the N groups of data blocks. For example, all the data blocks included between the (m+1) overhead blocks corresponding to the slot which needs to be divided into the sub-slots are divided in a uniform interleaving manner to obtain the N groups of data blocks, with an interleaving period being N.

In the present disclosure, all the data blocks included between the (m+1) overhead blocks corresponding to the slot which needs to be divided into the sub-slots are uniformly encoded.

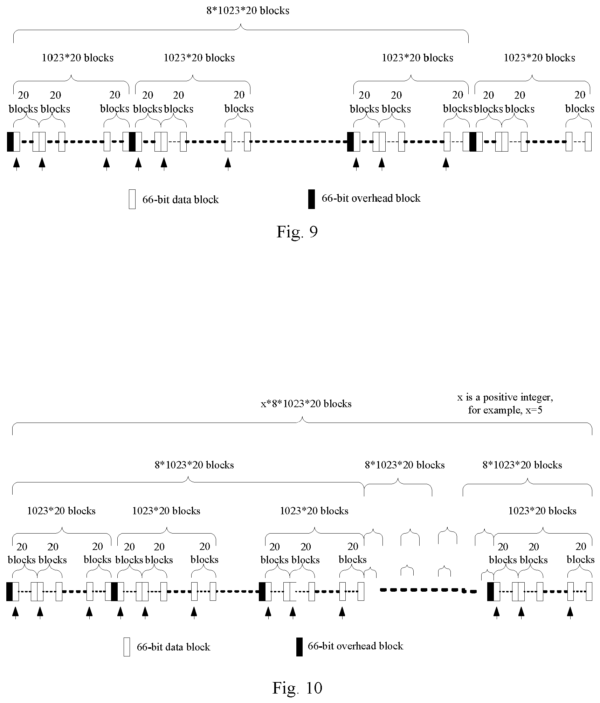

When a client service is transmitted by using the FlexE protocol, the client service is carried and transmitted in some fixed slots among 20*n slots (n is the number of physical channels). A FlexE slot layer has 20*n slots, and 1023 66-bit data blocks are repeated between two adjacent overhead blocks in each slot, that is, 1023 data blocks exist between two overhead blocks in each slot, and those data blocks belong to the same slot. The 1023 data blocks in a slot are numbered, such as data block 1, data block 2, data block 3, ...... data block 1022 and data block 1023. If each data block is individually configured as an independent sub-slot (or some data blocks may be configured as one sub-slot, for example, the data blocks with odd numbers are configured as one sub-slot and the data blocks with even numbers are configured as the other sub-slot, thereby obtaining 2 sub-slots in total), one slot can be divided into 1023 sub-slots, and thus the number of the slots defined by the FlexE protocol is expanded by 1023 times from 20*n to 1023 *20*n, which achieves the objective of increasing the number of the slots and reducing the slot rate/bandwidth. However, in the case where one slot is divided into 1023 parts, since 1023 is not a multiple of 2 and 5, if a bandwidth of 5G bit/s is divided into 1023 parts, a bandwidth/rate of each part is 4.887585532M bit/s and is not an integer, and a rate of a combination of several parts is not an integer either. Therefore, such division may result in unequal sub-slots in many scenarios. In practical applications, bandwidths of client services are generally nominal rates, such as 10M, 100M, 1G, 1.25G and 2.5G (unit: bit/s). For example, when a sub-slot bandwidth of 2.5G bit/s is needed, one 5G slot can be divided into two sub-slots, with one sub-slot occupying 512 slot blocks (slightly less than the bandwidth of 2.5G bit/s) among the 1023 slot blocks and the other sub-slot occupying 513 slot blocks (slightly greater than the bandwidth of 2.5G bit/s) among the 1023 slot blocks, such that the two sub-slot bandwidths are unequal. If each of the two sub-slots only occupies 512 slot blocks among the 1023 slot blocks, the two sub-slots have equal rates but the rates of both of the slots are less than the desired standard speed, which fails to realize full-flow transmission. If the data blocks between a plurality of FlexE overhead blocks are uniformly numbered, for example, as shown in Fig. 9, one FlexE frame includes eight overhead blocks and one FlexE slot includes 8*1023 data blocks in one frame. If all the data blocks of one slot in one frame are numbered as data block 1, data block 2, data block 3, ...... data block 1022, data block 1023, data block 1023+1, data block 1023+2 ... ...data block 2*1023, data block 2*1023+1 ... ...data block 8*1023, one slot corresponds to 8*1023 data blocks. Since the maximal total number of the sub-slots is a multiple of 8 and can be evenly divisible by 2, 4 and 8, one slot can be equally divided into 2 sub-slots, 4 sub-slots or 8 sub-slots. When a sub-slot having a rate of 1.25 G bit/s is needed, one slot (having a rate of 5 G bit/s) can be divided into four sub-slots having equal rates, and a rate of each sub-slot is 1.25 G bit/s.

In practical applications, a large number of client services have a rate of 1G bit/s, so it is required to divide one slot (having a rate of 5G bit/s) into five sub-slots having equal rates; since 8*1023 is not a multiple of 5 and cannot be evenly divisible by 5, when one slot is directly divided into five sub-slots, the sub-slots are unequal in the rate, the rates of some sub-slots are greater than 1G bit/s while the rates of the other sub-slots are less than 1G bit/s, which cannot meet the requirement. For one slot, since five FlexE frames includes 5*8*1023 data blocks as shown in Fig. 10 (x=5), all the data blocks in the five frames may be numbered as data block 1, data block 2, data block 3, ...... data block 1022, data block 1023, data block 1023+1, data block 1023+2 ...... data block 2*1023, data block 2*1023+1 ...... data block 8*1023, data block 8*1023+1 ...... data block 2*8*1023, data block 2*8*1023+1 ...... data block 5*8*1023, and the total number of the data blocks is 5*8*1023 which is the multiples of 2, 4, 5 and 8, in which case one slot (having a rate of 5G bit/s) can be divided into five sub-slots having equal rates and a rate of each sub-slot is 1G bit/s.

In the present disclosure, when the number of the frames to which the (m+1) overhead blocks belong is greater than or equal to 2, a range of the frames covered by the sub-slots may be represented in any one of the following manners: using part or all of bits in a reserved field in an overhead block of a frame to indicate a sequence number of the frame covered by the sub-slots; or using part or all of bits in a reserved field in an overhead block of a frame to indicate that the current frame or the next frame is a predetermined frame of the frames covered by the sub-slots, and determining a total number of the frames covered by the sub-slots with a software configuration manner, a manage channel transmission manner or a network management command transmission manner.

The predetermined frame may include any one of the first frame and the last frame.

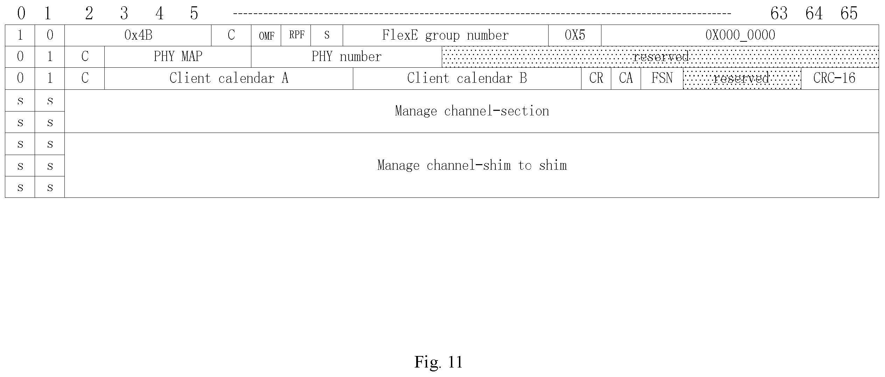

When one slot covering a plurality of FlexE frames is divided into a plurality of sub-slots, the transmitting end and the receiving end need to determine a frame range of the sub-slots obtained by the division, so that a field may be set in a reserved field in a FlexE frame to indicate a range of the frames covered by the sub-slots. For example, as shown in Fig. 11, a Frame Series Number (FSN) field is set in a reserved field in a FlexE frame, and the sequence numbers of the frames covered by the sub-slots are used to indicate the range of the frames covered by the sub-slots. A value of the FSN field is a cyclic variable. When the range of the frames covered by the sub-slots is five frames, the contents of the FSN fields in the frames may be 0, 1, 2, 3, 4, 0, 1, 2, 3, 4, 0 ...... and increase from 0 to 4 in a cyclic way. When one slot needs to be divided into sub-slots, the data blocks in a cycle period (frame 0 to frame 4) are uniformly encoded and uniformly divided into a plurality of sub-slots. The transmitting end and the receiving end determine to which sub-slot each data block belongs according to the same slot division method, and the content of a client service is uploaded on the sub-slots. For example, when the slot division method covers five FlexE frames, the FSN fields vary from 0 to 4 and are configured to indicate the sequence numbers of the frames covered by the sub-slots of one FlexE slot and indirectly indicate the number of the cyclic frames of the sub-slots. In practical applications, the FSN fields may be expressed in a plurality of different ways, for example, five cycle periods may also be expressed in various ways such as 1 to 5, 4 to 0 and 5 to 1.

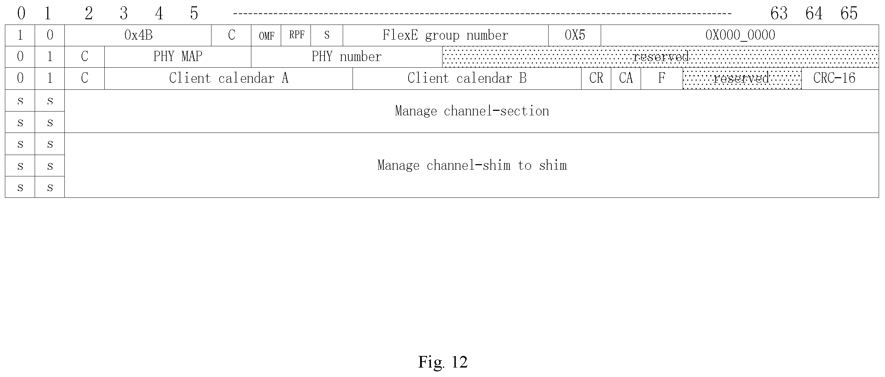

The range of the frames covered by the sub-slots may be expressed through configuration by the devices at two ends and indication by a first frame flag in addition to using the FSN fields to indicate the sequence numbers of the frames, as shown in Fig. 12. In Fig. 12, a first frame flag F (first) is set in a reserved field to indicate that the current frame is the first frame of a plurality of sequential frames to indicate the first frame (or the last frame, and the next frame is the first frame) of a plurality of FlexE frames covered during the sub-slots division. The total number of the frames covered by the sub-slots is not transmitted in the reserved field, and the total number of the covered frames is determined by the devices at the two ends with a software configuration manner, a manage channel transmission manner or a network management command transmission manner.

The manage channel transmission manner may refer to transmitting the total number of the covered frames through a manage channel byte in an overhead block. The manage channel byte may be a manage channel-section or a manage channel-shim to shim. The two manage channel bytes are configured to transmit management packets which may be various Ethernet packets, and the contents of the packets are customized by users.

In the present disclosure, a switching moment of the client services carried by the sub-slots is located at a boundary of a frame cycle period of the frames to which the (m+1) overhead blocks belong.

In the present disclosure, a switching moment of a primary slot configuration table and a standby slot configuration table in the overhead blocks is located at a frame boundary, or at a boundary of a frame cycle period of the frames to which the (m+1) overhead blocks belong.

In the present disclosure, a C bit is inverted in a last frame among the frames to which the (m+1) overhead blocks belong, and a state of the primary slot configuration table and a state of the standby slot configuration table are switched in the first frame among the frames to which the next (m+1) overhead blocks belong.

When the client configuration contents of the sub-slots are switched, a switching moment is also located at the boundary of the frame cycle period. When no slot division is performed, the FlexE protocol specifies that a switching moment of the slot configuration tables, namely the calendar A and the calendar B, can only exist at a frame boundary and that, when three C bits in a frame are inverted, a state of the calendar A and a state of the calendar B are switched at the next frame boundary to switch the table which is originally in the operating mode to the standby mode and switch the table which is originally in the standby mode to the operating mode. When the slot division is performed, in addition to existing at the frame boundary, the switching moment must exist at a boundary of the plurality of the frames covered by the sub-slots, that is, the configuration tables are switched at the first frame of the plurality of the frames covered by the sub-slots. In specific implementations, a C bit in a FlexE overhead block in the last frame of the plurality of the frames covered by the sub-slots should be inverted, and the configuration tables should be switched formally in the next frame (i.e., the first frame of a plurality of frames). For example, when the slot division manner covers five FlexE frames, the FSN fields vary in a range of 0 to 4, inversion of a C bit is carried out only in a frame in which the content of an FSN field is 4 (the last frame in a plurality of frames), and the calendar A and the calendar B are switched in the next frame (in which the content of an FSN field is equal to 0, which indicates that the next frame is the first frame in a frame period). In a frame in which the content of an FSN field is equal to 0, 1, 2 or 3, a C bit cannot be inverted and the calendar A and the calendar B cannot be switched, so as to ensure that each sub-slot is received within the frame cycle period. The FSN fields are configured to indicate the sequence numbers of the frames covered by the sub-slots of one FlexE slot and indirectly indicate the number of the cyclic frames of the sub-slots. In practical applications, the FSN fields may be expressed in a plurality of different ways, for example, five cycle periods may also be expressed in various ways such as 1 to 5, 4 to 0 and 5 to 1.

In the present disclosure, the client flag content may be expressed in any one of the following ways: using a first part obtained by dividing a slot configuration table in the overhead blocks to indicate whether the slot participates in a slot division mode, and using a second part obtained by dividing the slot configuration table in the overhead blocks to represent the client flag content of the slot or of the sub-slot, the first part may be a high part of the slot configuration table and the second part may be a low part of the slot configuration table, or the first part may be a low part of the slot configuration table and the second part may be a high part of the slot configuration table; using some bits of a reserved field of the slot configuration table in the overhead blocks to indicate whether the slot participates in the slot division mode; and determining a sequence number of a slot which participates in the slot division mode with a software configuration manner, a manage channel transmission manner or a network management command transmission manner.

In the present disclosure, some bits of a reserved field of a slot configuration table in the overhead blocks are used to represent a sequence number of a sub-slot corresponding to the client flag content in the multi-frame to which the overhead block belongs.

In the present disclosure, the configuration of the client flag content of the sub-slot is implemented with a CR bit and a CA bit in the overhead blocks.

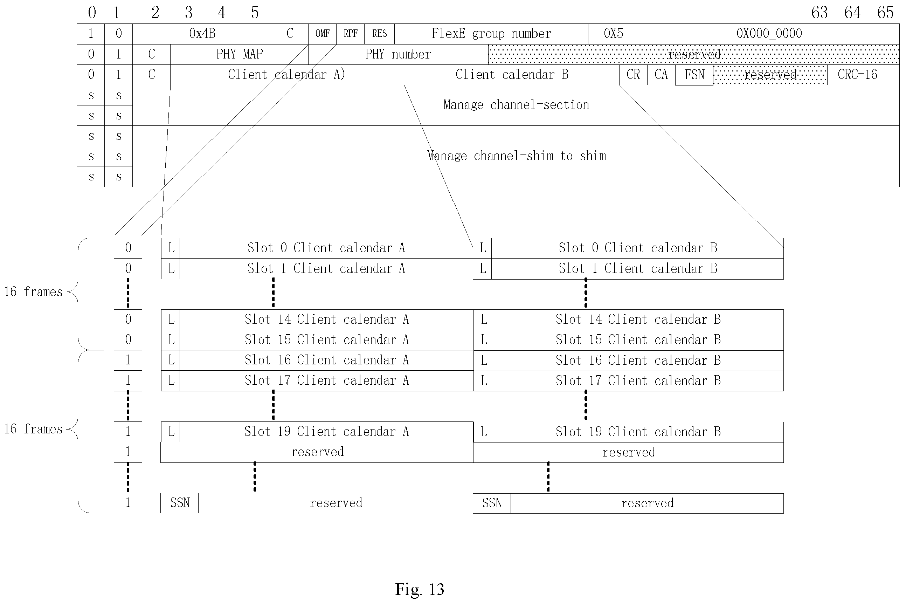

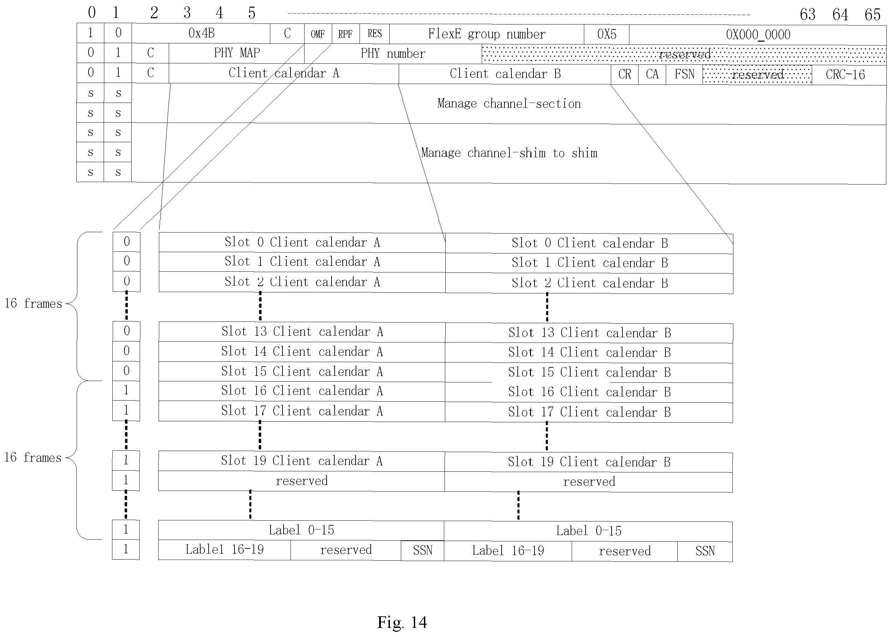

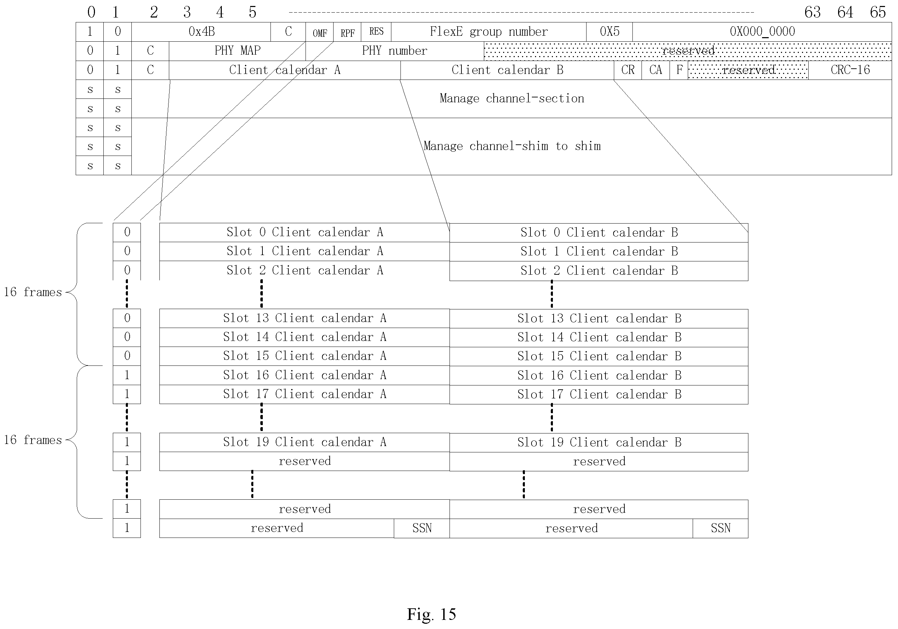

After a slot division range is determined, the client flag content of each sub-slot needs to be determined. In the FlexE standards, the calendar A and the calendar B are configured to transmit the client flag content carried by each slot (which client content is carried by the slot). In a multi-frame (thirty two frames form one multi-frame) cycle, the calendar in each of the first 20 frames provides the corresponding client flag contents of the 20 slots of the member. The corresponding positions in the last 12 frames in the multi-frame are reserved fields. For all the slots in a FlexE frame, some may be divided into many sub-slots, while the others may not need to be divided. A sub-slot flag L (label) is set in a multi-frame structure to indicate whether a slot participates in the slot division mode. The client flag content of the slot may be divided into a high part and a low part. As shown in Fig. 13, the high part is a flag L which indicates whether the slot participates in the slot division mode, and the low part represents the client flag content of the slot or of the sub-slot. When the flag L indicates that the slot participates in the slot division mode, the low part represents the client flag content of one of the sub-slots; when the flag L indicates that the slot does not participate in the slot division mode, the low part represents the client flag content of the slot. The flag L may also be set in a reserved field in the calendar, as shown in Fig. 14. Each member has 20 slots, so that 20 flags L are configured to indicate whether each slot participates in the slot division mode, and each flag L may be expressed by one bit. The content of a calendar in each FlexE frame is only 16 bits, and a total of 20 bits may be set in two rows of the reserved fields to transmit the 20 flags L. Since whether a slot participates in the slot division mode and the operating mode of a slot is typically stable and does not change frequently, instead of using the flag L to indicate whether the slot is divided into sub-slots, it is possible to determine the sequence number of the slot which participates in the slot division mode by the devices at two ends with various manners in specific applications, such as a software configuration manner, a manage channel transmission manner or a network management command transmission manner, so that the flag L may be omitted from the multi-frame structure, as shown in Fig. 15.

The manage channel transmission manner may refer to transmitting the sequence number of the slot which participates in the slot division mode through a manage channel byte in an overhead block. The manage channel byte may be a manage channel-section or a manage channel-shim to shim. The two manage channel bytes are configured to transmit management packets which may be various Ethernet packets, and the contents of the packets are customized by users.

When one slot is divided into a plurality of sub-slots, the content of a slot position in a calendar is shared by all the sub-slots, the position can only be configured to transmit the client flag content of one sub-slot in a multi-frame period, and the client flag contents of different sub-slots may be transmitted in different multi-frame periods, so that the client flags of all the sub-slots may be transmitted through a plurality of multi-frame periods. A Sub-Slot Number (SSN) field is set in a reserved field of the calendar to indicate the client flag content of which sub-slot is transmitted in a current multi-frame. The SSNs sequentially change in each multi-frame to indicate sequence numbers of sub-slots in the multi-frame. If one slot does not participate in the slot division mode, the content of the SSN field is ignored. When one slot participates in the slot division mode, an SSN field indicates to which sub-slot period a multi-frame belongs. For example, in the case where one slot is equally divided into two sub-slots, the contents of the SSN fields are continuously repeated from 0 to 1 then to 0, and so on. When an SSN field in one FlexE multi-frame period is 0, it is indicated that a client flag of the sub-slot 0 is transmitted in the period, and the content in a corresponding slot position in a calendar is the client flag of the sub-slot 0; and when the SSN field is 1, it is indicated that a client flag of the sub-slot 1is transmitted in the period, and the content in a corresponding slot position in the calendar is the client flag of the sub-slot 1. Similarly, in the case where one slot is equally divided into five sub-slots, the contents of the SSN fields are continuously repeated from 0 to 1, 2, 3 and 4 then to 0, and so on. When an SSN field in one FlexE multi-frame period is 0, it is indicated that a client flag of the sub-slot 0 is transmitted in the period, and the slot table content in a calendar is the client flag of the sub-slot 0; when the SSN field is 1, it is indicated that the slot table content in the calendar is a client flag of the sub-slot 1; when the SSN field is 2, it is indicated that the slot table content in the calendar is a client flag of the sub-slot 2; when the SSN field is 3, it is indicated that the slot table content in the calendar is a client flag of the sub-slot 3; and when the SSN field is 4, it is indicated that the slot table content in the calendar is a client flag of the sub-slot 4. The number of the sub-slots into which a slot is divided is equal to the number of the FlexE multi-frame periods which are needed to transmit the client flag contents of all the sub-slots. The content of the SSN field may be a sequence number, or may be represented by other discontinuous data and symbols, all of which fall within the scope of the present disclosure.

In the FlexE protocol, the configuration of a calendar is performed by using the C bit, the CR bit and the CA bit. The Client calendar has two sets of configuration information: the Client calendar A and the Client calendar B, which are respectively in the operating mode and the standby mode at a specific time point, and the operating states of the two tables are dynamically and smoothly switched through the C bit. When all the C bits are "0", the Client calendar A is in the operating mode and the Client calendar B is in the standby mode; conversely, when all the C bits are "1", the Client calendar A is in the standby mode and the Client calendar B is in the operating mode. In a normal operation process, the transmitting terminal and the receiving terminal operate according to the contents of the table which is in the operating mode. When the client flag content in a slot needs to be modified to reconfigure the slot, the standby calendar is modified to configure new client flag content, and then the operating states of the calendars are switched through the C bits to switch the modified standby table to the operating mode, so that the transmitting terminal and the receiving terminal operate according to the newly configured content. The FlexE protocol defines a calendar configuration process, and the calendar configuration mechanism defined in the FlexE protocol is also adopted when a slot is configured in a sub-slot mode, instead of originally completing the configuration and modification of the client flag contents of all slots in one multi-frame period, the configuration of the client flag contents of all slots and of all sub-slots is completed in a plurality of multi-frame periods. In the sub-slot mode, an SSN field indicates which sub-slot the current multi-frame period belongs to, the client information of the sub-slot corresponding to the SSN field is set as the content in a corresponding slot position in the calendar, the configuration of one sub-slot is completed in one multi-frame period, and the configuration of the client flag contents of all the sub-slots is completed in a plurality of multi-frame periods. After the configuration information of all the sub-slots is transmitted, the transmitting end inverts the CR bit to inform the receiving end of the need to switch the calendars, the receiving end identifies the configuration information of all the sub-slots and then returns a CA response message, the transmitting end inverts the C bit in the last frame among a plurality of FlexE frame periods, and a state of the operating calendar and a state of the standby calendar are formally switched in the next frame (the first frame in a plurality of Flexe frame periods), thereby modifying the configuration content of the sub-slots.

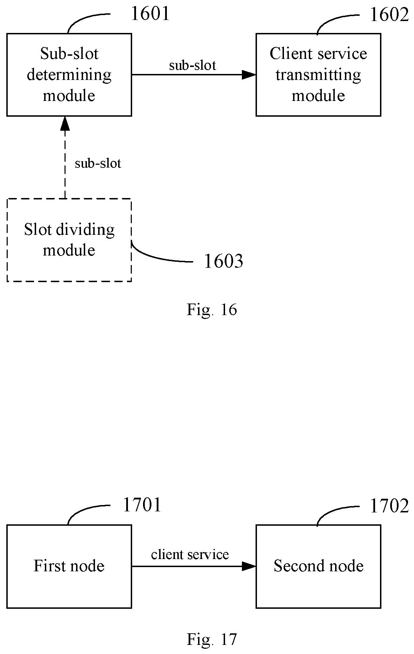

With reference to Fig. 16, the present disclosure provides a device for transmitting client services, including a sub-slot determining module 1601 and a client service transmitting module 1602.

The sub-slot determining module 1601 is configured to determine sub-slots for carrying a client service according to a bandwidth of the client service, with data blocks corresponding to the sub-slots including one of N groups of data blocks obtained by equally dividing all data blocks included between (m+1) overhead blocks corresponding to a slot, and m and N being integers greater than or equal to 1.

The client service transmitting module 1602 is configured to carry and transmit the client service in the determined sub-slots, or receive the client service in the determined sub-slots.

In the present disclosure, the device may further include a sub-slot dividing module 1603.

The sub-slot dividing module 1603 is configured to determine a slot which needs to be divided into sub-slots, and equally divide all the data blocks included between the (m+1) overhead blocks corresponding to the slot which needs to be divided into the sub-slots to obtain the N groups of data blocks.

In the present disclosure, the sub-slot dividing module 1603 is configured to equally divide all the data blocks included between the (m+1) overhead blocks corresponding to the slot which needs to be divided into the sub-slots to obtain the N groups of data blocks with the following method: dividing all the data blocks included between the (m+1) overhead blocks corresponding to the slot which needs to be divided into the sub-slots in a uniform interleaving manner to obtain the N groups of data blocks, with an interleaving period being N.

In the present disclosure, all the data blocks included between the (m+1) overhead blocks are uniformly encoded.

In the present disclosure, when the number of the frames to which the (m+1) overhead blocks belong is greater than or equal to 2, a range of the frames covered by the sub-slots may be represented in any one of the following manners: using part or all of bits in a reserved field in an overhead block of a frame to indicate a sequence number of the frame covered by the sub-slots; or using part or all of bits in a reserved field in an overhead block of a frame to indicate that the current frame or the next frame is a predetermined frame of the frames covered by the sub-slots, and determining a total number of the frames covered by the sub-slots with a software configuration manner, a manage channel transmission manner or a network management command transmission manner, with the predetermined frame including any one of the first frame and the last frame.

In the present disclosure, a switching moment of the client services carried by the sub-slots is located at a boundary of a frame cycle period of the frames to which the (m+1) overhead blocks belong.

In the present disclosure, a switching moment of a primary slot configuration table and a standby slot configuration table in the overhead blocks is located at a frame boundary, or at a boundary of a frame cycle period of the frames to which the (m+1) overhead blocks belong.

In the present disclosure, a C bit is inverted in the last frame among the frames to which the (m+1) overhead blocks belong, and a state of the primary slot configuration table and a state of the standby slot configuration table are switched in the first frame among the frames to which the next (m+1) overhead blocks belong.

In the present disclosure, the client flag content may be expressed in any one of the following ways: using a first part obtained by dividing a slot configuration table in the overhead blocks to indicate whether the slot participates in a slot division mode, and using a second part obtained by dividing the slot configuration table in the overhead blocks to represent the client flag content of the slot or of the sub-slot; using some bits of a reserved field of the slot configuration table in the overhead blocks to indicate whether the slot participates in the slot division mode; and determining a sequence number of a slot which participates in the slot division mode with a software configuration manner, a manage channel transmission manner or a network management command transmission manner.

In the present disclosure, some bits of a reserved field of a slot configuration table in the overhead blocks are used to represent a sequence number of a sub-slot corresponding to the client flag content in the multi-frame to which the overhead block belongs.

In the present disclosure, the configuration of the client flag content of the sub-slot is implemented with a CR bit and a CA bit in the overhead blocks.

The specific implementations of the device for transmitting client services are the same as those of the method for transmitting client services described in the above embodiments, and thus will not be repeated here.

The present disclosure provides a device for transmitting client services, including a processor and a computer-readable storage medium having instructions stored therein. When the instructions are executed by the processor, any one of the above methods for transmitting client services is implemented.

The present disclosure provides a computer-readable storage medium having a computer program stored therein. When the computer program is executed by a processor, the steps of any one of the above methods for transmitting client services are performed.

With reference to Fig. 17, the present disclosure provides a system for transmitting client services, including a first node 1701 and a second node 1702.

The first node 1701 is configured to determine sub-slots for carrying a client service according to a bandwidth of the client service, with data blocks corresponding to the sub-slots including one of N groups of data blocks obtained by equally dividing all data blocks included between (m+1) overhead blocks corresponding to a slot, and m and N being integers greater than or equal to 1, and carry and transmit the client service in the determined sub-slots.

The second node 1702 is configured to determine sub-slots for carrying a client service according to a bandwidth of the client service, with data blocks corresponding to the sub-slots including one of N groups of data blocks obtained by equally dividing all data blocks included between (m+1) overhead blocks corresponding to a slot, and m and N being integers greater than or equal to 1, and receive the client service in the determined sub-slots.

In the present disclosure, the first node 1701 and/or the second node 1702 are/is further configured to determine a slot which needs to be divided into sub-slots, and equally divide all the data blocks included between the (m+1) overhead blocks corresponding to the slot which needs to be divided into the sub-slots to obtain the N groups of data blocks.

In the present disclosure, the first node 1701 and/or the second node 1702 are/is further configured to equally divide all the data blocks included between the (m+1) overhead blocks corresponding to the slot which needs to be divided into the sub-slots to obtain the N groups of data blocks with the following method: dividing all the data blocks included between the (m+1) overhead blocks corresponding to the slot which needs to be divided into the sub-slots in a uniform interleaving manner to obtain the N groups of data blocks, with an interleaving period being N.

In the present disclosure, all the data blocks included between the (m+1) overhead blocks are uniformly encoded.

In the present disclosure, when the number of the frames to which the (m+1) overhead blocks belong is greater than or equal to 2, the first node 1701 and/or the second node 1702 adopt(s) any one of the following manners to represent a range of the frames covered by the sub-slots: using part or all of bits in a reserved field in an overhead block of a frame to indicate a sequence number of the frame covered by the sub-slots; or using part or all of bits in a reserved field in an overhead block of a frame to indicate that the current frame or the next frame is a predetermined frame of the frames covered by the sub-slots, and determining a total number of the frames covered by the sub-slots with a software configuration manner, a manage channel transmission manner or a network management command transmission manner, with the predetermined frame including any one of the first frame and the last frame.

In the present disclosure, a switching moment of the client services carried by the sub-slots is located at a boundary of a frame cycle period of the frames to which the (m+1) overhead blocks belong.

In the present disclosure, a switching moment of a primary slot configuration table and a standby slot configuration table in the overhead blocks is located at a frame boundary, or at a boundary of a frame cycle period of the frames to which the (m+1) overhead blocks belong.

In the present disclosure, a C bit is inverted in the last frame among the frames to which the (m+1) overhead blocks belong, and a state of the primary slot configuration table and a state of the standby slot configuration table are switched in the first frame among the frames to which the next (m+1) overhead blocks belong.

In the present disclosure, the first node 1701 and/or the second node 1702 adopt(s) any one of the following ways to express the client flag content: using a first part obtained by dividing a slot configuration table in the overhead blocks to indicate whether the slot participates in a slot division mode, and using a second part obtained by dividing the slot configuration table in the overhead blocks to represent the client flag content of the slot or of the sub-slot; using some bits of a reserved field of the slot configuration table in the overhead blocks to indicate whether the slot participates in the slot division mode; and determining a sequence number of a slot which participates in the slot division mode with a software configuration manner, a manage channel transmission manner or a network management command transmission manner.

In the present disclosure, the first node 1701 and/or the second node 1702 use(s) some bits of a reserved field of a slot configuration table in the overhead blocks to represent a sequence number of a sub-slot corresponding to the client flag content in the multi-frame to which the overhead block belongs.

In the present disclosure, the first node 1701 and/or the second node 1702 use(s) a CR bit and a CA bit in the overhead blocks to implement the configuration of the client flag content of the sub-slot.

The specific implementations of the system for transmitting client services are the same as those of the method for transmitting client services described in the above embodiments, and thus will not be repeated here.

It should be understood by those of ordinary skill in the art that the functional modules or units in all or some of the steps, the systems and the devices in the method disclosed above may be implemented as software, firmware, hardware, or suitable combinations thereof. If implemented as hardware, the division between the functional modules or units stated above is not necessarily corresponding to the division of physical components; for example, one physical component may have a plurality of functions, or one function or step may be performed through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those of ordinary skill in the art, the term "computer storage media" includes volatile/nonvolatile and removable/non-removable media used in any method or technology for storing information (such as computer-readable instructions, data structures, program modules and other data). The computer storage media include a Random Access Memory (RAM), a Read-Only Memory (ROM), an Electrically Erasable Programmable Read-Only Memory (EEPROM), a Flash Memory or other memory techniques, a Compact Disc Read-Only Memory (CD-ROM), a Digital Versatile Disc (DVD) or other optical discs, a magnetic cassette, a magnetic tape, a magnetic disk or other magnetic storage devices, or any other media which can be configured to store the desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

## Claims

1. A method for transmitting client services, comprising
determining sub-slots for carrying a client service according to a bandwidth of the client service (800);
determining a number of the sub-slots according to the bandwidth of the client service and bandwidths of the sub-slots;
dividing all data blocks included between (m+1) overhead blocks corresponding to a slot into N groups of data blocks according to the number of the sub-slots, wherein N is an integer greater than or equal to 1 and is equal to the number of the sub-slots, each of the sub-slots corresponds to a corresponding one of the N groups of data blocks, and data blocks included in each of the N groups of data blocks has an equal number, and each of the sub-slots has an equal rate; and
carrying and transmitting the client service in the determined sub-slots (801), or receiving the client service in the determined sub-slots (801).

2. The method of claim 1, wherein the step of dividing all the data blocks included between the (m+1) overhead blocks corresponding to the slot into the N groups of data blocks comprises:
dividing all the data blocks included between the (m+1) overhead blocks corresponding to the slot into the N groups of data blocks in a uniform interleaving manner, wherein an interleaving period is N.

3. The method of any one of claims 1 to 2, wherein all the data blocks included between the (m+1) overhead blocks are uniformly encoded.

4. The method of any one of claims 1 to 2, wherein in a case where a number of frames to which the (m+1) overhead blocks belong is greater than or equal to 2, a range of frames covered by the sub-slots is represented in any one of the following manners:
using part or all of bits in a reserved field in an overhead block of a frame to indicate a sequence number of the frame covered by the sub-slots; or
using part or all of bits in a reserved field in an overhead block of a frame to indicate that the current frame or the next frame is a predetermined frame of the frames covered by the sub-slots, and determining a total number of the frames covered by the sub-slots with a software configuration manner, a manage channel transmission manner or a network management command transmission manner,
wherein the predetermined frame comprises any one of the first frame and the last frame.

5. The method of any one of claims 1 to 2, wherein in a case where a number of frames to which the (m+1) overhead blocks belong is greater than or equal to 2, a switching moment of the client services carried by the sub-slots is located at a boundary of a frame cycle period of the frames to which the (m+1) overhead blocks belong.

6. The method of any one of claims 1 to 2, wherein in a case where a number of frames to which the (m+1) overhead blocks belong is greater than or equal to 2, a switching moment of a primary slot configuration table and a standby slot configuration table in the (m+1) overhead blocks is located at a frame boundary, or at a boundary of a frame cycle period of the frames to which the (m+1) overhead blocks belong.

7. The method of claim 6, wherein a C bit is inverted in a last frame among the frames to which the (m+1) overhead blocks belong, and a state of the primary slot configuration table and a state of the standby slot configuration table are switched in a first frame among frames to which next (m+1) overhead blocks belong.

8. The method of any one of claims 1 to 2, wherein client flag content indicating a client carried by a corresponding sub-slot is expressed in any one of the following ways:
using a first part obtained by dividing a slot configuration table in the (m+1) overhead blocks to indicate whether the slot participates in a slot division mode, and using a second part obtained by dividing the slot configuration table in the (m+1) overhead blocks to represent the client flag content of the slot or of the sub-slot;
using some bits of a reserved field of the slot configuration table in the (m+1) overhead blocks to indicate whether the slot participates in the slot division mode; and
determining a sequence number of a slot which participates in the slot division mode with a software configuration manner, a manage channel transmission manner or a network management command transmission manner.

9. The method of claim 8, wherein some bits of the reserved field of the slot configuration table in the (m+1) overhead blocks are used to represent a sequence number of a sub-slot corresponding to the client flag content in a multi-frame to which the (m+1) overhead blocks belong.

10. The method of claim 8, wherein configuration of the client flag content of the sub-slot is implemented with a CR bit and a CA bit in the (m+1) overhead blocks.

11. A device for transmitting client services, comprising
a sub-slot determining module (1601) configured to determine sub-slots for carrying a client service according to a bandwidth of the client service, determine a number of the sub-slots according to the bandwidth of the client service and bandwidths of the sub-slots, and divide all data blocks included between (m+1) overhead blocks corresponding to a slot into N groups of data blocks according to the number of the sub-slots, wherein N is an integer greater than or equal to 1 and is equal to the number of the sub-slots, each of the sub-slots corresponds to a corresponding one of the N groups of data blocks, and data blocks included in each of the N groups of data blocks has an equal number, and each of the sub-slots has an equal rate; and
a client service transmitting module (1602) configured to carry and transmit the client service in the determined sub-slots, or receive the client service in the determined sub-slots.

12. A device for transmitting client services, comprising a processor and a computer-readable storage medium having instructions stored therein, wherein when the instructions are executed by the processor, the method for transmitting client services of any one of claims 1 to 10 is implemented.

13. A computer-readable storage medium having a computer program stored therein, wherein when the computer program is executed by a processor, causes the processor to perform the steps of the method for transmitting client services of any one of claims 1 to 10.

14. A system for transmitting client services, comprising
a first node (1701) configured to determine sub-slots for carrying a client service according to a bandwidth of the client service, determine a number of the sub-slots according to the bandwidth of the client service and bandwidths of the sub-slots, and divide all data blocks included between (m+1) overhead blocks corresponding to a slot into N groups of data blocks according to the number of the sub-slots, wherein N is an integer greater than or equal to 1 and is equal to the number of the sub-slots, each of the sub-slots corresponds to a corresponding one of the N groups of data blocks, and data blocks included in each of the N groups of data blocks has an equal number, and each of the sub-slots has an equal rate; the first node further configured to carry and transmit the client service in the determined sub-slots; and
a second node (1702) configured to determine sub-slots for carrying a client service according to a bandwidth of the client service, determine a number of the sub-slots according to the bandwidth of the client service and bandwidths of the sub-slots, and divide all data blocks included between (m+1) overhead blocks corresponding to a slot into N groups of data blocks according to the number of the sub-slots, wherein N is an integer greater than or equal to 1 and is equal to the number of the sub-slots, each of the sub-slots corresponds to a corresponding one of the N groups of data blocks, and data blocks included in each of the N groups of data blocks has an equal number, and each of the sub-slots has an equal rate; and the second node further configured to receive the client service in the determined sub-slots.

## Patentansprüche

1. Verfahren zum Übertragen von Client-Services, umfassend:
Bestimmen von Teilspeicherplätzen zum Tragen eines Client-Services gemäß einer Bandbreite des Client-Services (800);
Bestimmen einer Anzahl der Teilspeicherplätze gemäß der Bandbreite des Client-Services und der Bandbreiten der Teilspeicherplätze;
Teilen aller Datenblöcke, die zwischen (m+1) Kopfdatenblöcken, die einem Speicherplatz entsprechen, eingeschlossen sind, in N Gruppen von Datenblöcken gemäß der Anzahl der Teilspeicherplätze, wobei N eine ganze Zahl größer oder gleich 1 ist und gleich der Anzahl der Teilspeicherplätze ist, jeder der Teilspeicherplätze einer entsprechenden der N Gruppen von Datenblöcken entspricht und Datenblöcke, die in jeder der N Gruppen von Datenblöcken eingeschlossen sind, eine gleiche Anzahl aufweisen und jeder der Teilspeicherplätze eine gleiche Rate aufweist; und
Tragen und Übertragen des Client-Services in den bestimmten Teilspeicherplätzen (801) oder Empfangen des Client-Services in den bestimmten Teilspeicherplätzen (801).

2. Verfahren nach Anspruch 1, wobei der Schritt des Teilens aller Datenblöcke, die zwischen den (m+1) Kopfdatenblöcken, die dem Speicherplatz entsprechen, eingeschlossen sind, in die N Gruppen von Datenblöcken umfasst:
Teilen aller Datenblöcke, die zwischen den (m+1) Kopfdatenblöcken, die dem Speicherplatz entsprechen, eingeschlossen sind, in die N Gruppen von Datenblöcken in einer einheitlich verschachtelten Weise, wobei ein verschachtelter Zeitraum N ist.

3. Verfahren nach einem der Ansprüche 1 bis 2, wobei alle Datenblöcke, die zwischen den (m+1) Kopfdatenblöcken eingeschlossen sind, einheitlich codiert sind.

4. Verfahren nach einem der Ansprüche 1 bis 2, wobei in einem Fall, in dem eine Anzahl von Rahmen, zu denen die (m+1) Kopfdatenblöcke gehören, größer oder gleich 2 ist, eine Reichweite von Rahmen, die von den Teilspeicherplätzen abgedeckt werden, in einer der folgenden Weisen repräsentiert wird:
Verwenden eines Teils oder aller Bits in einem reservierten Feld in einem Kopfdatenblock eines Rahmens zum Angeben einer Sequenznummer des Rahmens, der von den Teilspeicherplätzen abgedeckt wird; oder
Verwenden eines Teils oder aller Bits in einem reservierten Feld in einem Kopfdatenblock eines Rahmens zum Angeben, dass der aktuelle Rahmen oder der nächste Rahmen ein vorbestimmter Rahmen der Rahmen ist, die von den Teilspeicherplätzen abgedeckt werden, und Bestimmen einer Gesamtanzahl der Rahmen, die von den Teilspeicherplätzen abgedeckt werden, mit einer Softwarekonfigurationsweise, einer Verwaltungskanalübertragungsweise oder einer Netzwerk-Verwaltungsbefehlsübertragungsweise,
wobei der vorbestimmte Rahmen einen beliebigen des ersten Rahmens und des letzten Rahmens umfasst.

5. Verfahren nach einem der Ansprüche 1 bis 2, wobei in einem Fall, in dem eine Anzahl von Rahmen, zu denen die (m+1) Kopfdatenblöcke gehören, größer oder gleich 2 ist, ein Schaltmoment der Client-Services, die von den Teilspeicherplätzen getragen werden, sich an einer Grenze eines Rahmenzykluszeitraums der Rahmen befindet, zu denen die (m+1) Kopfdatenblöcke gehören.

6. Verfahren nach einem der Ansprüche 1 bis 2, wobei in einem Fall, in dem eine Anzahl von Rahmen, zu denen die (m+1) Kopfdatenblöcke gehören, größer oder gleich 2 ist, ein Schaltmoment einer primären Speicherplatzkonfigurationstabelle und einer Bereitschaftsspeicherplatzkonfigurationstabelle in den (m+1) Kopfdatenblöcken sich an einer Rahmengrenze oder an einer Grenze eines Rahmenzykluszeitraums der Rahmen befindet, zu denen die (m+1) Kopfdatenblöcke gehören.

7. Verfahren nach Anspruch 6, wobei ein C-Bit in einem letzten Rahmen unter den Rahmen, zu denen die (m+1) Kopfdatenblöcke gehören, invertiert wird und ein Zustand der primären Speicherplatzkonfigurationstabelle und ein Zustand der Bereitschaftsspeicherplatzkonfigurationstabelle in einem ersten Rahmen unter Rahmen, zu denen nächste (m+1) Kopfdatenblöcke gehören, geschaltet werden.

8. Verfahren nach einem der Ansprüche 1 bis 2, wobei Client-Flag-Inhalt, der einen durch einen entsprechenden Teilspeicherplatz getragenen Client angibt, auf eine der folgenden Weisen ausgedrückt wird:
Verwenden eines ersten Teils, der durch Teilen einer Speicherplatzkonfigurationstabelle in den (m+1) Kopfdatenblöcken erhalten wird, zum Angeben, ob der Speicherplatz an einem Speicherplatzteilungsmodus teilnimmt, und Verwenden eines zweiten Teils, der durch Teilen der Speicherplatzkonfigurationstabelle in den (m+1) Kopfdatenblöcken erhalten wird, zum Repräsentieren des Client-Flag-Inhalts des Speicherplatzes oder des Teilspeicherplatzes;
Verwenden einiger Bits eines reservierten Feldes der Speicherplatzkonfigurationstabelle in den (m+1) Kopfdatenblöcken zum Angeben, ob der Speicherplatz an dem Speicherplatzteilungsmodus teilnimmt; und
Bestimmen einer Sequenznummer eines Speicherplatzes, der an dem Speicherplatzteilungsmodus teilnimmt, mit einer Softwarekonfigurationsweise, einer Verwaltungskanalübertragungsweise oder einer Netzwerk-Verwaltungsbefehlsübertragungsweise.

9. Verfahren nach Anspruch 8, wobei einige Bits des reservierten Feldes der Speicherplatzkonfigurationstabelle in den (m+1) Kopfdatenblöcken zum Repräsentieren einer Sequenznummer eines Teilspeicherplatzes verwendet werden, der dem Client-Flag-Inhalt in einem Mehrfachrahmen entspricht, zu dem die (m+1) Kopfdatenblöcke gehören.

10. Verfahren nach Anspruch 8, wobei die Konfiguration des Client-Flag-Inhalts des Teilspeicherplatzes mit einem CR-Bit und einem CA-Bit in den (m+1) Kopfdatenblöcken implementiert wird.

11. Vorrichtung zum Übertragen von Client-Services, umfassend:
ein Teilspeicherplatzbestimmungsmodul (1601), das zum Bestimmen von Teilspeicherplätzen zum Tragen eines Client-Services gemäß einer Bandbreite des Client-Services, zum Bestimmen einer Anzahl der Teilspeicherplätze gemäß der Bandbreite des Client-Services und der Bandbreiten der Teilspeicherplätze und zum Teilen aller Datenblöcke, die zwischen (m+1) Kopfdatenblöcken, die einem Speicherplatz entsprechen, eingeschlossen sind, in N Gruppen von Datenblöcken gemäß der Anzahl der Teilspeicherplätze konfiguriert ist, wobei N eine ganze Zahl größer oder gleich 1 ist und gleich der Anzahl der Teilspeicherplätze ist, jeder der Teilspeicherplätze einer entsprechenden der N Gruppen von Datenblöcken entspricht und Datenblöcke, die in jeder der N Gruppen von Datenblöcken eingeschlossen sind, eine gleiche Anzahl aufweisen und jeder der Teilspeicherplätze eine gleiche Rate aufweist; und
ein Client-Service-Übertragungsmodul (1602), das zum Tragen und Übertragen des Client-Services in den bestimmten Teilspeicherplätzen oder zum Empfangen des Client-Services in den bestimmten Teilspeicherplätzen konfiguriert ist.

12. Vorrichtung zum Übertragen von Client-Services, umfassend einen Prozessor und ein computerlesbares Speichermedium mit darin gespeicherten Anweisungen, wobei, wenn die Anweisungen durch den Prozessor ausgeführt werden, das Verfahren zum Übertragen von Client-Services nach einem der Ansprüche 1 bis 10 implementiert wird.

13. Computerlesbares Speichermedium mit einem darin gespeicherten Computerprogramm, wobei, wenn das Computerprogramm durch einen Prozessor ausgeführt wird, der Prozessor zum Durchführen der Schritte des Verfahrens zum Übertragen von Client-Services nach einem der Ansprüche 1 bis 10 veranlasst wird.

14. System zum Übertragen von Client-Services, umfassend:
einen ersten Knoten (1701), der zum Bestimmen von Teilspeicherplätzen zum Tragen eines Client-Services gemäß einer Bandbreite des Client-Services, zum Bestimmen einer Anzahl der Teilspeicherplätze gemäß der Bandbreite des Client-Services und der Bandbreiten der Teilspeicherplätze und zum Teilen aller Datenblöcke, die zwischen (m+1) Kopfdatenblöcken, die einem Speicherplatz entsprechen, eingeschlossen sind, in N Gruppen von Datenblöcken gemäß der Anzahl der Teilspeicherplätze konfiguriert ist, wobei N eine ganze Zahl größer oder gleich 1 ist und gleich der Anzahl der Teilspeicherplätze ist, jeder der Teilspeicherplätze einer entsprechenden der N Gruppen von Datenblöcken entspricht und Datenblöcke, die in jeder der N Gruppen von Datenblöcken eingeschlossen sind, eine gleiche Anzahl aufweisen und jeder der Teilspeicherplätze eine gleiche Rate aufweist; wobei der erste Knoten ferner zum Tragen und Übertragen des Client-Services in den bestimmten Teilspeicherplätzen konfiguriert ist; und
einen zweiten Knoten (1702), der zum Bestimmen von Teilspeicherplätzen zum Tragen eines Client-Services gemäß einer Bandbreite des Client-Services, zum Bestimmen einer Anzahl der Teilspeicherplätze gemäß der Bandbreite des Client-Services und der Bandbreiten der Teilspeicherplätze und zum Teilen aller Datenblöcke, die zwischen (m+1) Kopfdatenblöcken, die einem Speicherplatz entsprechen, eingeschlossen sind, in N Gruppen von Datenblöcken gemäß der Anzahl der Teilspeicherplätze konfiguriert ist, wobei N eine ganze Zahl größer oder gleich 1 ist und gleich der Anzahl der Teilspeicherplätze ist, jeder der Teilspeicherplätze einer entsprechenden der N Gruppen von Datenblöcken entspricht und Datenblöcke, die in jeder der N Gruppen von Datenblöcken eingeschlossen sind, eine gleiche Anzahl aufweisen und jeder der Teilspeicherplätze eine gleiche Rate aufweist; und wobei der zweite Knoten ferner zum Empfangen des Client-Services in den bestimmten Teilspeicherplätzen konfiguriert ist.

## Revendications

1. Procédé pour envoyer des services clients, comprenant les étapes consistant à :
déterminer des sous-créneaux pour transporter un service client en fonction d'une largeur de bande du service client (800) ;
déterminer un nombre des sous-créneaux en fonction de la largeur de bande du service client et des largeurs de bande des sous-créneaux ;
diviser tous les blocs de données inclus entre (m+1) blocs de surdébit correspondant à un créneau en N groupes de blocs de données en fonction du nombre des sous-créneaux, où N est un nombre entier supérieur ou égal à 1 et est égal au nombre des sous-créneaux, chacun des sous-créneaux correspond à l'un correspondant des N groupes de blocs de données, et les blocs de données inclus dans chacun des N groupes de blocs de données ont un nombre égal, et chacun des sous-créneaux a un débit égal ; et
transporter et envoyer le service client dans les sous-créneaux déterminés (801), ou recevoir le service client dans les sous-créneaux déterminés (801).

2. Procédé selon la revendication 1, dans lequel l'étape consistant à diviser tous les blocs de données inclus entre les (m+1) blocs de surdébit correspondant au créneau en les N groupes de blocs de données comprend les étapes consistant à :
diviser tous les blocs de données inclus entre les (m+1) blocs de surdébit correspondant au créneau en les N groupes de blocs de données d'une manière d'entrelacement uniforme, où une période d'entrelacement est N.

3. Procédé selon l'une quelconque des revendications 1 à 2, dans lequel tous les blocs de données inclus entre les (m+1) blocs de surdébit sont codés uniformément.

4. Procédé selon l'une quelconque des revendications 1 à 2, dans lequel, dans le cas où un nombre de trames auxquelles les (m+1) blocs de surdébit appartiennent est supérieur ou égal à 2, une plage de trames couvertes par les sous-créneaux est représentée de l'une quelconque des manières suivantes :
utiliser une partie ou la totalité des bits dans un champ réservé dans un bloc de surdébit d'une trame pour indiquer un numéro de séquence de la trame couverte par les sous-créneaux ; ou
utiliser une partie ou la totalité des bits dans un champ réservé dans un bloc de surdébit d'une trame pour indiquer que la trame actuelle ou la trame suivante est une trame prédéterminée des trames couvertes par les sous-créneaux, et déterminer un nombre total des trames couvertes par les sous-créneaux avec une manière de configuration logicielle, une manière de gérer la transmission de canal ou une manière de gérer la transmission de commande de réseau,
dans lequel la trame prédéterminée comprend l'une quelconque de la première trame et de la dernière trame.

5. Procédé selon l'une quelconque des revendications 1 à 2, dans lequel, dans le cas où un nombre de trames auxquelles les (m+1) blocs de surdébit appartiennent est supérieur ou égal à 2, un moment de commutation des services clients transportés par les sous-créneaux est localisé à une limite d'une période de cycle de trame des trames auxquelles les (m+1) blocs de surdébit appartiennent.

6. Procédé selon l'une quelconque des revendications 1 à 2, dans lequel, dans le cas où un nombre de trames auxquelles les (m+1) blocs de surdébit appartiennent est supérieur ou égal à 2, un moment de commutation d'une table de configuration de créneaux primaires et d'une table de configuration de créneaux de secours dans les (m+1) blocs de surdébit est localisé à une limite de trame, ou à une limite d'une période de cycle de trame des trames auxquelles les (m+1) blocs de surdébit appartiennent.

7. Procédé selon la revendication 6, dans lequel un bit C est inversé dans une dernière trame parmi les trames auxquelles les (m+1) blocs de surdébit appartiennent, et un état de la table de configuration de créneaux primaires et un état de la table de configuration de créneaux de secours sont commutés dans une première trame parmi les trames auxquelles les (m+1) blocs de surdébit suivants appartiennent.

8. Procédé selon l'une quelconque des revendications 1 à 2, dans lequel un contenu de drapeau client indiquant un client transporté par un sous-créneau correspondant est exprimé de l'une quelconque des manières suivantes :
utiliser une première partie obtenue en divisant une table de configuration de créneaux dans les (m+1) blocs de surdébit pour indiquer si le créneau participe à un mode de division de créneaux, et utiliser une seconde partie obtenue en divisant la table de configuration de créneaux dans les (m+1) blocs de surdébit pour représenter le contenu de drapeau client du créneau ou du sous-créneau ;
utiliser certains bits d'un champ réservé de la table de configuration de créneaux dans les (m+1) blocs de surdébit pour indiquer si le créneau participe au mode de division de créneaux ; et
déterminer un numéro de séquence d'un créneau qui participe au mode de division de créneaux avec une manière de configuration logicielle, une manière de gérer la transmission de canal ou une manière de gérer la transmission de commande de réseau.

9. Procédé selon la revendication 8, dans lequel certains bits du champ réservé de la table de configuration de créneaux dans les (m+1) blocs de surdébit sont utilisés pour représenter un numéro de séquence d'un sous-créneau correspondant au contenu de drapeau client dans une multi-trame à laquelle les (m+1) blocs de surdébit appartiennent.

10. Procédé selon la revendication 8, dans lequel la configuration du contenu de drapeau client du sous-créneau est mise en œuvre avec un bit CR et un bit CA dans les (m+1) blocs de surdébit.

11. Dispositif pour envoyer des services clients, comprenant :
un module de détermination de sous-créneaux (1601) configuré pour déterminer des sous-créneaux pour transporter un service client en fonction d'une largeur de bande du service client, déterminer un nombre des sous-créneaux en fonction de la largeur de bande du service client et des largeurs de bande des sous-créneaux, et diviser tous les blocs de données inclus entre (m+1) blocs de surdébit correspondant à un créneau en N groupes de blocs de données en fonction du nombre des sous-créneaux, où N est un nombre entier supérieur ou égal à 1 et est égal au nombre des sous-créneaux, chacun des sous-créneaux correspond à l'un correspondant des N groupes de blocs de données, et les blocs de données inclus dans chacun des N groupes de blocs de données ont un nombre égal, et chacun des sous-créneaux a un débit égal ; et
un module de transmission de service client (1602) configuré pour transporter et envoyer le service client dans les sous-créneaux déterminés, ou recevoir le service client dans les sous-créneaux déterminés.

12. Dispositif pour envoyer des services clients, comprenant un processeur et un moyen de stockage lisible par ordinateur sur lequel sont stockées des instructions, dans lequel, lorsque les instructions sont exécutées par le processeur, le procédé pour envoyer des services clients selon l'une quelconque des revendications 1 à 10 est mis en œuvre.

13. Moyen de stockage lisible par ordinateur sur lequel est stocké un programme informatique, dans lequel, lorsque le programme informatique est exécuté par un processeur, le processeur est amené à réaliser les étapes du procédé pour envoyer des services clients selon l'une quelconque des revendications 1 à 10.

14. Système pour envoyer des services clients, comprenant :
un premier nœud (1701) configuré pour déterminer des sous-créneaux pour transporter un service client en fonction d'une largeur de bande du service client, déterminer un nombre des sous-créneaux en fonction de la largeur de bande du service client et des largeurs de bande des sous-créneaux, et diviser tous les blocs de données inclus entre (m+1) blocs de surdébit correspondant à un créneau en N groupes de blocs de données en fonction du nombre des sous-créneaux, où N est un nombre entier supérieur ou égal à 1 et est égal au nombre des sous-créneaux, chacun des sous-créneaux correspond à l'un correspondant des N groupes de blocs de données, et les blocs de données inclus dans chacun des N groupes de blocs de données ont un nombre égal, et chacun des sous-créneaux a un débit égal ; le premier nœud étant en outre configuré pour transporter et envoyer le service client dans les sous-créneaux déterminés ; et
un deuxième nœud (1702) configuré pour déterminer des sous-créneaux pour transporter un service client en fonction d'une largeur de bande du service client, déterminer un nombre des sous-créneaux en fonction de la largeur de bande du service client et des largeurs de bande des sous-créneaux, et diviser tous les blocs de données inclus entre (m+1) blocs de surdébit correspondant à un créneau en N groupes de blocs de données en fonction du nombre des sous-créneaux, où N est un nombre entier supérieur ou égal à 1 et est égal au nombre des sous-créneaux, chacun des sous-créneaux correspond à l'un correspondant des N groupes de blocs de données, et les blocs de données inclus dans chacun des N groupes de blocs de données ont un nombre égal, et chacun des sous-créneaux a un débit égal ; et le deuxième nœud étant en outre configuré pour recevoir le service client dans les sous-créneaux déterminés.
